# EUROPÄISCHE PATENTANMELDUNG

(11) **EP 2 551 202 A1**
(43) Veröffentlichungstag der Anmeldung: **30.01.2013**
(21) Anmeldenummer: 12005113.1
(22) Anmeldetag: 11.07.2012
(51) Int. Cl.: B65B 5/06, B65B 35/54, B65B 43/52, B65G 15/14, B65G 15/42, B65G 21/20, B65G 47/244, B65B 65/00

(54) **Mehrspurige Schalenverschliessmaschine**

(30) Priorität: 29.07.2011 DE 102011108919
(71) Anmelder: Multivac Sepp Haggenmüller GmbH & Co. KG, 87787 Wolfertschwenden (DE)
(72) Erfinder: Mader, Andreas, 87463 Dietmannsried (DE); Taghipour, Alireza, 87439 Kempten (DE)
(74) Vertreter: Grünecker, Kinkeldey, Stockmair & Schwanhäusser

(57) **Zusammenfassung**

Die Erfindung bezieht sich auf eine mehrspurige Schalenverschließmaschine (1) mit einer seitlichen Anlage (5), die eine seitliche Anlagefläche (5a, 5b) ausgerichtet zu Schalen (4) aufweist und in Transportrichtung (R) bewegbar ausgebildet ist, um den Schalentransport von einem Zuführförderer (2) in ein Siegelwerkzeug (9) zu unterstützen.

## Beschreibung

Die Erfindung bezieht sich auf eine mehrspurige Schalenverschließmaschine gemäß dem Oberbegriff des Anspruchs 1.

Verpackungsmaschinen der oben genannten Gattung in einer zweispurigen Ausführung weisen häufig eine mittig zwischen den Spuren angeordnete, vertikale Anlage und zwei beidseitig außen angeordnete Greiferarme auf. Mit Produkt befüllte Schalen werden dabei über zwei Förderbänder vor die Versiegelungsvorrichtung transportiert. Anschließend bewegen sich die Greiferarme an die mittig angeordnete Anlage heran, dabei werden die Schalen von den Greiferarmen formschlüssig erfasst und an die Anlage gedrückt. Die Greiferarme schieben die Schalen dann in die offene Versiegelungsvorrichtung, wobei der gegenüber den Greiferarmen befindliche Schalenrand an der Anlage entlang gleitet. Im Inneren der Versiegelungseinrichtung ist ebenfalls eine Anlage vorhanden. Schalen, die in Transportrichtung eine geringere Länge aufweisen als die Breite der Schale, neigen während des Gleitens des schmalen Schalenrandes an der Anlage dazu zu verkanten oder zu bremsen. Dies führt zu Verdrehungen oder zu Erschütterungen, bei denen flüssige Produkte herausschwappen können.

In der EP 1 336 567 A1 ist ein Greifersystem offenbart, das kraftschlüssig den seitlichen Schalenrand erfasst, damit die Schale sich nicht verdrehen kann oder zu Vibrationen neigt. Nachteil dieser Ausführung ist eine zusätzliche Klemmeinrichtung pro Greiferarm und ein hierfür notwendiger, zusätzlicher bewegter Aktor.

Aufgabe der vorliegenden Erfindung ist es, mit möglichst einfachen Mitteln eine zweispurige Schalenverschließmaschine hinsichtlich des Schalentransports von den Zuführförderern in die Versiegelungsvorrichtung so zu verbessern, dass auch Schalen, die eine geringere Länge als Breite aufweisen, prozesssicher transportiert werden können.

Diese Aufgabe wird gelöst durch eine mehrspurige Schalenverschließmaschine mit den Merkmalen des Anspruchs 1.

Die erfindungsgemäße mehrspurige Schalenverschließmaschine umfasst ein Greifersystem, ein Siegelwerkzeug und eine Anlage, die eine seitliche Anlagefläche ausgerichtet zu den zu transportierenden Schalen aufweist. Die Erfindung zeichnet sich dadurch aus, dass die Anlagefläche wenigstens abschnittsweise, vorzugsweise vollständig in Transportrichtung bewegbar ausgeführt ist, um die Bewegung des seitlich an der Anlagefläche anliegenden Schalenrandes zu unterstützen.

Vorzugsweise weist die Anlagefläche mehrere Rollen auf, die die auftretende Reibung minimieren.

Bevorzugt sind dabei die Rollen annähernd vertikal oder in einem variablen verstellbaren Winkel zur Horizontalen vorgesehen, um die Schale im Bereich der Anlage an den Rollen hochgleiten zu lassen, um so die Reibung des Schalenbodens gegenüber dem Zuführförderer zu minimieren bzw. den Schalenboden vom Zuführförderer abzuheben.

Bei einer vorteilhaften alternativen Ausführung ist die Anlagefläche derart ausgebildet, dass je zwei vertikale Transportbänder mit dem Greifersystem zusammenwirken, um Schalen zu transportieren. Dabei ist die Schale kraftschlüssig zwischen dem Greifersystem und einem Transportband prozesssicher bewegbar. Anstatt eines Transportbandes können auch mehrere angetrieben Rollen vorgesehen sein.

Dabei ist es vorteilhaft, wenn die Geschwindigkeiten der Transportbänder mit der Geschwindigkeit des Greifersystems synchronisierbar sind. Dies ermöglicht eine synchrone Bewegung der Transportbänder und des Greifersystems in der Transportrichtung. Dabei können Greiferarme des Greifersystems synchron oder separat - aber synchron - mit dem jeweiligen Transportband, zusammenwirken.

Bevorzugt weisen die Transportbänder einen gemeinsamen Antrieb auf; alternativ kann jeweils ein Antrieb für die Transportbänder vorgesehen sein.

Dabei ist bevorzugt ein Servomotor für den Antrieb vorgesehen, um eine hohe Dynamik zur Verfügung zu stellen, um die Leistung der Schalenverschließmaschine steigern zu können.

Um den Schalenrand leicht mittels des Transportbandes transportieren zu können, weisen die Transportbänder bevorzugt eine haftende Oberfläche, beispielsweise eine Silikonbeschichtung, für die anliegenden Schalenränder auf.

Bei einer zweispurigen Ausführung weisen die zwei vorgesehenen Transportbänder der Anlage vorzugsweise eine zueinander gegenläufige Drehrichtung auf, so dass zwei Reihen von Schalen von dem Greifersystem dem Siegelwerkzeug zugeführt werden können.

Vorzugsweise ist entlang der Anlage in Transportrichtung beidseitig eine horizontale Auflage vorgesehen, um einen Schalenboden während des Transports teilweise aufzunehmen, um den Schalenboden gegenüber dem Zuführförderer abzuheben. Dabei wird die Reibung gegenüber dem Zuführförderer minimiert, da der Zuführförderer bereits während des Transports von mittels des Greifersystems bewegten Schalen neue Schalen transportiert und dabei das Greifersystem und die Zuführbänder unterschiedliche Geschwindigkeiten aufweisen können.

Im Folgenden werden vorteilhafte Ausführungsbeispiele der Erfindung anhand einer Zeichnung näher erläutert. Im Einzelnen zeigen:

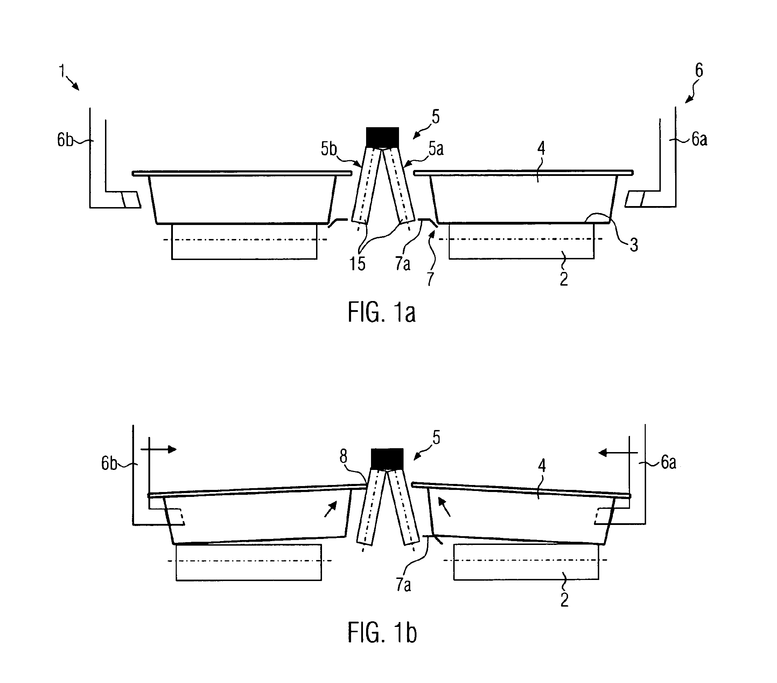

- Figur 1a:: eine schematische Schnittansicht in Transportrichtung einer erfindungsgemäßen Schalenverschließmaschine in geöffneter Stellung des Greifersystems,
- Figur 1 b:: wie Figur 1 a in geschlossener Stellung des Greifersystems,
- Figur 2a:: eine schematische Ansicht einer Variante mit Transportbändern als Anlage,
- Figur 2b:: eine schematische Ansicht in Transportrichtung der Variante von Figur 2a in geschlossener Stellung des Greifersystems.

Gleiche Komponenten sind in den Figuren durchgängig mit gleichen Bezugszeichen versehen worden.

Figur 1a zeigt eine erfindungsgemäße zweispurige Schalenverschließmaschine 1 in einer vertikalen Schnittansicht in Transportrichtung R. Auf zwei parallelen Zuführförderern 2 liegen Schalenböden 3 von zu verschließenden Verpackungsschalen 4 auf. Eine Anlage 5 zwischen den Zuführförderern 2 weist zwei seitliche Anlageflächen 5a, 5b mit mehreren Rollen 15 auf, die geneigt gegenüber einer Vertikalen sind. Auf beiden Seiten sind außen neben den Zuführförderern Greiferarme 6a, 6b eines Greifersystems 6 angeordnet, die einerseits in Transportrichtung R und andererseits gegen die Anlage 5 bewegbar ist. Zwischen den Zuführförderern 2 und der Anlage 5 sind optional Auflagen 7 vorgesehen, die eine horizontale Auflagefläche 7a aufweisen, die oberhalb der Transportebene der Zuführförderer 2 angeordnet sind.

In Figur 1b ist eine Stellung dargestellt, nachdem die Greiferarme 6a, 6b die Schalen 4 gegen die Anlage 5 bewegt haben. Dabei schiebt beispielsweise der rechte Greiferarm 6a die Schale 4 auf die horizontale Auflagefläche 7a der Auflage 7 und hebt damit zumindest teilweise den Schalenboden 3 vom Zuführförderer ab (siehe rechte Ansicht). Der Greiferarm 6a muss dabei die Schale 4 nicht ganz bis an die Rollen 15 schieben.

Der Effekt, die Schale 4 im Bereich der Anlage 5 anzuheben, kann auch ohne die Auflage 7 ausführbar sein (siehe linke Ansicht). Bei einer solchen Ausführung drückt der Greiferarm 6a die Schale 4 mit einer leichten Kraft in horizontaler Richtung gegen die Rollen 15, so dass der daran anliegende Schalenrand 8 an den geneigten Rollen 15 aufsteigen kann, damit sich auch hier der Schalenboden 3 wenigstens bereichsweise vom Zuführförderer 2 abhebt, um die Reibung der Schale 4 zum Zuführförderer 2 zu minimieren.

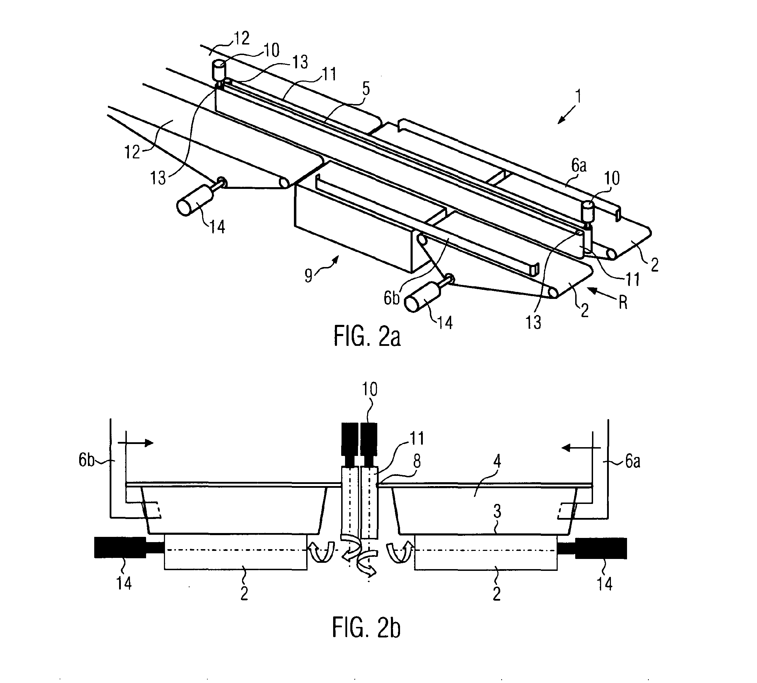

Figur 2a zeigt eine Variante mit zwei parallelen Zuführförderern 2, die nicht gezeigte Schalen 4 in der Transportrichtung R bis vor das Siegelwerkzeug 9 bewegen. Die mittige Anlage 5 weist hier zwei mit Servomotoren 10 angetriebene vertikale Transportbänder 11 auf. Stromabwärts sind zwei Abführbänder 12 nach dem Siegelwerkzeug 9 vorgesehen, um die mit einer Deckelfolie verschlossenen Schalen 4 aufzunehmen. Die verschlossenen Schalen 4 werden durch die Greiferarme 6a, 6b von dem Siegelwerkzeug 9 auf die Abführbänder 12 übergeben.

Die Funktionsweise der Ausführung aus Figur 2a wird anhand der Figur 2b näher erläutert. Die Greifer 6a, 6b bewegen die Schalen 4 gegen die um vertikale (oder alternativ leicht geneigte) Umlenkrollen 13 geführten Transportbänder 11, so dass die Schalen 4 mit ihrem Schalenrand 8 an die Transportbänder 11 mit einer Kraft angedrückt werden, die eine zum Transport notwendige Haftung aufbringt. Alternativ werden die Schalen 4 nur in die Nähe der Transportbänder 11 geschoben. Die Transportbänder 11 und die Greiferarme 6a, 6b weisen während des Transportes der Schalen 4 in Transportrichtung R eine gemeinsame Geschwindigkeit auf. Somit wirkt sich die Reibung des Schalenbodens 3 auf dem Zuführförderer 2 bzw. auf das Abführband 12 nicht negativ aus, obwohl der Zuführförderer 2 bzw. das Abführband 12 eine andere Geschwindigkeit und/oder eine entgegen gesetzte Bewegungsrichtung besitzen können. Die Zuführförderer 2 und das Abführband 12 weisen Servoantriebe 13 auf.

## Patentansprüche

1. Mehrspurige Schalenverschließmaschine (1), umfassend ein Greifersystem (6), ein Siegelwerkzeug (9) und eine Anlage (5), die eine seitliche Anlagefläche (5a, 5b) ausgerichtet zu Schalen (4) aufweist, **dadurch gekennzeichnet, dass** die Anlagefläche (5a, 5b) wenigstens abschnittsweise in Transportrichtung (R) bewegbar ausgebildet ist.

2. Schalenverschließmaschine nach Anspruch 1, **dadurch gekennzeichnet, dass** die Anlagefläche (5a, 5b) mehrere Rollen (15) aufweist.

3. Schalenverschließmaschine nach Anspruch 2, **dadurch gekennzeichnet, dass** die Rollen (5) annähernd vertikal oder in einem variablen einstellbaren Winkel vorgesehen sind.

4. Schalenverschließmaschine nach Anspruch 1, **dadurch gekennzeichnet, dass** die Anlagefläche (5a, 5b) derart ausgebildet ist, dass je zwei vertikale Transportbänder (11) mit dem Greifersystem (6) zusammenwirken, um Schalen (4) zu transportieren.

5. Schalenverschließmaschine nach Anspruch 4, **dadurch gekennzeichnet, dass** die Geschwindigkeiten der Transportbänder (11) mit der Geschwindigkeit von Greiferarmen (6a, 6b) des Greifersystems (6) synchronisierbar sind.

6. Schalenverschließmaschine nach Anspruch 4 oder 5, **dadurch gekennzeichnet, dass** die Transportbänder (11) einen gemeinsamen Antrieb (10) oder jeweils einen eigenen Antrieb (10) aufweisen.

7. Schalenverschließmaschine nach Anspruch 6, **dadurch gekennzeichnet, dass** für den Antrieb (10) ein Servomotor vorgesehen ist.

8. Schalenverschließmaschine nach einem der Ansprüche 4 bis 7, **dadurch gekennzeichnet, dass** die Transportbänder (11) eine haftende Oberfläche für anliegende Schalenränder (8) aufweisen.

9. Schalenverschließmaschine nach Anspruch 8, **dadurch gekennzeichnet, dass** die Oberfläche der Transportbänder (11) als Silikonbeschichtung ausgebildet ist.

10. Schalenverschließmaschine nach einem der Ansprüche 4 bis 9, **dadurch gekennzeichnet, dass** die zwei Transportbänder (11) der Anlage (5) eine zueinander gegenläufige Drehrichtung aufweisen.

11. Schalenverschließmaschine nach einem der vorangehenden Ansprüche, **dadurch gekennzeichnet, dass** entlang der Anlage (5) in Transportrichtung (R) beidseitig eine horizontale Auflagefläche (7a) vorgesehen ist, um einen Schalenboden (3) während des Transports teilweise aufzunehmen.
